# EUROPEAN PATENT APPLICATION

(11) **EP 4 447 140 A1**
(43) Date of publication of application: **16.10.2024**
(21) Application number: 21966690.6
(22) Date of filing: 08.12.2021
(51) Int. Cl.: H01M 4/13, H01M 4/139, H01M 4/62, H01M 4/64

(54) **ELECTRODE, ELECTROCHEMICAL DEVICE, AND ELECTRONIC DEVICE**

(71) Applicant: Ningde Amperex Technology Limited, Ningde, Fujian 352100 (CN)
(72) Inventor: LIU, Mingju, Ningde, Fujian 352100 (CN)
(74) Representative: Klunker IP Patentanwälte PartG mbB
(86) International application number: PCT/CN2021/136339
(87) International publication number: WO 2023/102766

(57) **Abstract**

This application proposes an electrode, an electrochemical apparatus, and an electronic apparatus. The electrode includes a current collector and an active material layer located on one side or two sides of the current collector, the active material layer including an active material and a conductive agent. The conductive agent includes carbon nanotubes, the active material layer includes rope-shaped carbon nanotube aggregates formed by the carbon nanotubes, the carbon nanotube aggregates are interwoven to form a cage-like network, and the active material is wrapped inside the cage-like network. The carbon nanotube aggregates are used to wrap particles of the active material, thereby enhancing the long-range conductivity of the active material layer and improving the structural stability.

## Description

### TECHNICAL FIELD

This application relates to the field of electrochemical energy storage, and in particular, to an electrode, an electrochemical apparatus, and an electronic apparatus.

### BACKGROUND

Electrochemical apparatuses, such as lithium-ion batteries, are widely used in various fields due to their advantages such as high energy density, high power, and long cycle life. With the development of technology, increasingly high requirements have been imposed on energy density of electrochemical apparatuses. To increase the energy density of electrochemical apparatuses, some technologies increase the capacity or voltage of active materials, while others increase the content of active materials per unit volume and reduce the content of inactive materials. Reducing the thickness of the current collector or separator, reducing the proportion of inactive materials in the formula, and preparing thicker electrodes can all reduce the proportion of inactive materials, but the existing improvement methods are still unsatisfactory, and further improvements are expected.

### SUMMARY

Some embodiments of this application provide an electrode, an electrochemical apparatus, and an electronic device.

In some embodiments of this application, an electrode is proposed. The electrode includes a current collector and an active material layer located on one side or two sides of the current collector, the active material layer including an active material and a conductive agent; and the conductive agent includes carbon nanotubes, the active material layer includes rope-shaped carbon nanotube aggregates formed by carbon nanotubes and interwoven to form a cage-like network, and the active material is wrapped inside the cage-like network. In some embodiments, the rope-shaped carbon nanotube aggregates are used to wrap particles of the active material, thereby enhancing the long-range conductivity of the active material layer and improving the structural stability. This is conducive to increasing the thickness of the active material layer to increase the energy density.

In some embodiments of this application, based on a total mass of the active material layer, a mass percentage of the carbon nanotube aggregates is 0.5%-5%. In some embodiments, a too-low mass percentage of the carbon nanotube aggregates is not conducive to conductivity, while a too-high mass percentage of the carbon nanotube aggregates may affect the volume capacity.

In some embodiments of this application, the carbon nanotube aggregate has a rope-shaped structure formed by 2-1000 carbon nanotubes intertwined, thereby improving the structural stability and stabilizing the active material layer.

In some embodiments of this application, the carbon nanotubes have a diameter of 0.5-10 nm and a length of 1-100 µm. In some embodiments, the carbon nanotubes with a too-small diameter or length are not conducive to improving the structural stability of the active material layer, while the carbon nanotubes with an excessive diameter or length are prone to breakage.

In some embodiments of this application, the carbon nanotube aggregates have a diameter of 1-1000 nm and a length of 1-100 µm. In some embodiments, the carbon nanotube aggregates with a too-small diameter or length are not conducive to improving the structural stability of the active material layer, while the carbon nanotube aggregates with an excessive diameter or length are prone to breakage.

In some embodiments of this application, thickness of the carbon nanotube aggregates on particle surfaces of the active material is 10-1000 nm. In some embodiments, the carbon nanotube aggregates with a too-small thickness on particle surfaces of the active material may not fix the particles of the active material well, while an excessive thickness may affect the volumetric energy density.

In some embodiments of this application, each network pore in the cage-like network includes 1 to 50 particles of the active material. In some embodiments, if there is too much active material in each network pore of the cage-like network, the improvement in conductivity may be less significant. No particles of the active material in the pores of the network reduce the volumetric energy density. In some embodiments of this application, Dv50 of the active material is 1-30 µm. In some embodiments, a too small Dv50 of the active material may affect the cycling performance, while an excessive Dv50 may affect the rate performance.

In some embodiments of this application, the electrode is a positive electrode, the current collector is a positive electrode current collector, the active material layer is a positive electrode active material layer, and compacted density ρ₁ of the positive electrode active material layer is ≥ 3.0 g/cm³. In some embodiments, a higher compacted density is conducive to increasing the energy density of the positive electrode active material layer. In some embodiments, porosity n₁ of the positive electrode active material layer satisfies: 20% ≥ n₁ ≥ 15%. In some embodiments, a too-small porosity may lead to insufficient electrolyte infiltration, while an excessive porosity may lead to a decrease in volumetric energy density. In some embodiments, resistivity of the positive electrode active material layer is 0.1 Ω*cm to 100 Ω*cm. In some embodiments, the positive electrode active material layer has an adhesion of ≥ 1 N/m. In some embodiments, the active material is a positive electrode material, and the positive electrode material includes at least one of lithium iron phosphate, lithium nickel cobalt manganate, lithium manganate, lithium cobalt oxide, lithium-rich materials, sulfur, or sulfur-based compounds. In some embodiments of this application, the electrode is a positive electrode, the current collector is a positive electrode current collector, the active material layer is a positive electrode active material layer, and compacted density ρ₁ of the positive electrode active material layer satisfies: 4.25 g/cm³ ≥ ρ₁ ≥ 2.3 g/cm³.

In some embodiments of this application, the electrode is a negative electrode, the current collector is a negative electrode current collector, the active material layer is a negative electrode active material layer, and compacted density ρ₂ of the negative electrode active material layer is ≥ 1.3 g/cm³. In some embodiments, a greater compacted density is conducive to increasing the volumetric energy density. In some embodiments, porosity n₂ of the negative electrode active material layer satisfies: 35% ≥ n₂ ≥ 25%, and this ensures the energy density while ensuring electrolyte infiltration. In some embodiments, resistivity of the negative electrode active material layer is 0.01 Ω*cm to 50 Q*cm. In some embodiment, the negative electrode active material has an adhesion of ≥ 1 N/m. In some embodiments, the negative electrode active material layer includes a negative electrode material, and the negative electrode material includes at least one of lithium titanate, silicon-based materials, tin-based materials, lithium metal materials, or carbon materials. In some embodiments of this application, the electrode is a negative electrode, the active material layer is a negative electrode active material layer, and compacted density ρ₂ of the negative electrode active material layer satisfies: 1.85 g/cm³ ≥ ρ₂ ≥ 1.35 g/cm³.

This application proposes an electrochemical apparatus including an electrode, where the electrode is any one of the electrodes in this application.

This application proposes an electronic apparatus including the electrochemical apparatus proposed in this application.

An embodiment of this application proposes an electrode. The electrode includes a current collector and an active material layer located on one side or two sides of the current collector, the active material layer including an active material and a conductive agent. The conductive agent includes carbon nanotubes, the active material layer includes rope-shaped carbon nanotube aggregates formed by carbon nanotubes, the carbon nanotube aggregates are interwoven to form a cage-like network, and the active material is wrapped inside the cage-like network. The carbon nanotube aggregates are used to wrap particles of the active material, thereby enhancing the long-range conductivity of the active material layer and improving the structural stability. This is conducive to improving the rate performance and energy density of the active material layer.

### BRIEF DESCRIPTION OF DRAWINGS

The above and other features, advantages, and aspects of embodiments of this application will become more apparent in conjunction with the accompanying drawings and with reference to the following detailed description. Throughout the drawings, the same or similar reference numbers indicate same or similar elements. It should be understood that the drawings are exemplary and that the components and elements are not necessarily drawn to scale.
FIG. 1 is a schematic diagram of an electrode according to an embodiment of this application.
FIG. 2 is a scanning electron microscope image of an active material layer according to an embodiment of this application.

### DESCRIPTION OF EMBODIMENTS

The following embodiments may help persons skilled in the art to understand this application more comprehensively, but do not limit this application in any manner.

An electrode in an electrochemical apparatus refers to an electrode prepared by stirring and mixing an active material, a conductive agent, a binder, an additive, and the like well in a solvent and applying a resulting mixture to a current collector, followed by drying and rolling. The binder present in the electrode not only reduces the energy density but also does not conduct electrons and ions. The presence of the binder hinders the transmission of electrons and ions between the active material and the current collector and increases the moving distance of the electrons and ions, thus limiting the rate performance. The presence of the binder also leads to an increase in the volume of the active material layer and a decrease in the volumetric energy density of the electrode active material layer. Therefore, developing a binder-free electrode becomes an urgent problem to be addressed.

In some technologies, a thin coating method is used. A precursor of an active material is prepared into a solution, and the solution is applied to a surface of a current collector and heated to generate the active material in situ on the surface of the current collector, thereby forming a binder-free electrode with a thickness of less than 10 µm. In other technologies, a light in-situ preparation technique is used, with a laser to irradiate a precursor of a mixture of graphene oxide and SnO₂ sol pre-coated on a copper foil in an environment with a protective gas. Through photochemical reactions initiated by laser, the precursor was transformed in situ into graphene /Sn-based composite materials, implementing preparation of the graphene /SnO₂ nanocomposite electrode in a one-step method. In other technologies, a combination of chemical vapor deposition and hydrothermal reaction techniques is used. A seamlessly connected three-dimensional graphene network produced by the chemical vapor deposition on foamed nickel can achieve excellent conductivity and large specific surface area simultaneously. Ni-Co selenide nanosheets grown by hydrothermal reaction and vertically aligned on three-dimensional graphene/foamed nickel can provide this network structure with a larger surface active region and rich electroactive sites and shorten the transmission path for ion diffusion.

However, in the thin coating method, a thickness of the active material layer on the surface of the current collector is less than 10 µm, and there are more layers of cells in the same thickness, so that the proportion of inactive materials increases, the energy density reduces, the thickness increases, the adhesion between the active material and the current collector weakens to make them prone to peel off, deteriorating the performance. In the laser in-situ preparation technique, graphene /Sn-based composite materials are mainly transformed by laser-initiated photochemical reactions. Due to the uneven distribution of laser energy along the thickness direction, it is prone to uneven transformation of composite materials. In the combination of chemical vapor deposition and hydrothermal reaction techniques, the preparation process is complex and the consistency is difficult to control.

In some embodiments of this application, to solve the technical problems encountered in increasing the energy density of an electrochemical apparatus, a binder-free electrode with no deterioration in electrical properties is proposed. The binder-free electrode can improve the electron and ion conduction, and promote the rate performance and energy density.

In some embodiments of this application, an electrode is proposed. The electrode includes a current collector and an active material layer located on one side or two sides of the current collector, the active material layer including an active material and a conductive agent; and the conductive agent includes carbon nanotubes, the active material layer includes rope-shaped carbon nanotube aggregates formed by carbon nanotubes, the carbon nanotube aggregates are interwoven to form a cage-like network, and the active material is wrapped inside the cage-like network. In some embodiments, the rope-shaped carbon nanotube aggregates are used to wrap particles of the active material, thereby enhancing the long-range conductivity of the active material layer and improving the structural stability. This is conducive to improving the rate performance and energy density of the active material layer.

In some embodiments of this application, the electrode does not contain a binder, thereby reducing the mass and volume occupied by the binder, increasing the energy density, and avoiding the impact on conductivity caused by addition of a binder. In addition, particles of the active material are wrapped by the rope-shaped carbon nanotube aggregates, so that the structural stability is improved, and the problem of unstable structure of the active material layer caused by the absence of a binder is avoided. This is conducive to improving the conductivity of the active material layer and increasing the energy density without deteriorating the electrical performance.

In some embodiments of this application, based on a total mass of the active material layer, a mass percentage of the carbon nanotube aggregates is 0.5%-5%. In some embodiments, the percentage of the carbon nanotube aggregates affects the conductivity and energy of the active material layer, and a too-low mass percentage of the carbon nanotube aggregates is not conducive to conductivity, while a too-high mass percentage of the carbon nanotube aggregates may affect the volume capacity.

In some embodiments of this application, the carbon nanotube aggregate has a rope-shaped structure formed by 2-1000 carbon nanotubes intertwined. The rope-shaped structure formed by at least 2 carbon nanotubes intertwined enhances the structural strength and improves the structural stability, stabilizing the active material layer.

In some embodiments of this application, the carbon nanotubes have a diameter of 0.5-10 nm and a length of 1-100 µm. In some embodiments, the carbon nanotubes with a too-small diameter or length are not conducive to improving the structural stability of the active material layer, while the carbon nanotubes with an excessive diameter or length are prone to breakage.

In some embodiments of this application, the carbon nanotube aggregates have a diameter of 1-1000 nm and a length of 1-100 µm. In some embodiments, the carbon nanotube aggregates with a too-small diameter or length are not conducive to improving the structural stability of the active material layer, while the carbon nanotube aggregates with an excessive diameter or length are prone to breakage and may affect the energy density of the active material layer.

In some embodiments of this application, thickness of the carbon nanotube aggregates on particle surfaces of the active material is 10-1000 nm. In some embodiments, the carbon nanotube aggregates with a too-small thickness on particle surfaces of the active material may not fix the particles of the active material well, and this is not conducive to improving the stability of the active material layer, while an excessive thickness of the carbon nanotube aggregates may affect the volumetric energy density.

In some embodiments of this application, each network pore in the cage-like network includes 1 to 50 particles of the active material. In some embodiments, if there is too much active material in each network pore of the cage-like network, there may be too many particles with a too large spacing distance from the carbon nanotubes, and the improvement in conductivity may be less significant. No particles of the active material in the pores of the network reduce an amount of the active material per unit volume and then reduce the volumetric energy density.

In some embodiments of this application, Dv50 of the active material is 1-30 µm. In some embodiments, a too small Dv50 of the active material may affect the cycling performance, while an excessive Dv50 may affect the rate performance.

In some embodiments of this application, the electrode is a positive electrode, the current collector is a positive electrode current collector, such as copper foil or aluminum foil, the active material layer is a positive electrode active material layer, and compacted density ρ₁ of the positive electrode active material layer is ≥ 3.0 g/cm³. In some embodiments, a higher compacted density is conducive to increasing the energy density of the positive electrode active material layer. However, an excessive compacted density may result in breakage of the particles of the active material, and this is not conducive to the cycling performance. Therefore, in some embodiments, the compacted density ρ₁ of the positive electrode active material layer satisfies: 4.25 g/cm³ ≥ ρ₁ ≥ 2.3 g/cm³, to prevent the particles of the active material from being broken while ensuring the energy density.

In some embodiments, porosity n₁ of the positive electrode active material layer satisfies: 20% ≥ n₁ ≥ 15%. In some embodiments, a too-small porosity may lead to insufficient electrolyte infiltration, affecting the performance of the active material, while an excessive porosity may lead to a decrease in volumetric energy density. In some embodiments, resistivity of the positive electrode active material layer is 0.1 Ω*cm to 100 Q*cm. The resistivity reflects conductivity of the positive electrode active material layer, so that this indicates that the positive electrode active material layer in the embodiments of this application has good conductivity. In some embodiments, the positive electrode active material layer has an adhesion of ≥ 1 N/m, thereby preventing separation between the positive electrode active material layer and the positive electrode current collector.

In some embodiments, the active material is a positive electrode material, and the positive electrode material includes at least one of lithium iron phosphate, lithium nickel cobalt manganate, lithium manganate, lithium cobalt oxide, lithium-rich materials, sulfur, or sulfur-based compounds, and, for example, may be one, two, or more of them.

In some embodiments of this application, the electrode is a negative electrode, the current collector is a negative electrode current collector, such as copper foil or aluminum foil, the active material layer is a negative electrode active material layer, and compacted density ρ₂ of the negative electrode active material layer is ≥ 1.3 g/cm³. In some embodiments, a greater compacted density is conducive to increasing the volumetric energy density. In some embodiments, an excessive compacted density may result in breakage of the active material particles, increased consumption of electrolyte, and deteriorated cycling performance. Therefore, in some embodiments, the compacted density ρ₂ of the negative electrode active material layer satisfies: 1.85 g/cm³ ≥ ρ₂ ≥ 1.35 g/cm³.

In some embodiments, porosity n₂ of the negative electrode active material layer satisfies: 35% ≥ n₂ ≥ 25%, so that the porosity is large enough to ensure the infiltration of electrolyte, and in addition, excessive porosity is limited to prevent the energy density from being affected. In some embodiments, resistivity of the negative electrode active material layer is 0.01 Ω*cm to 50 Q*cm, and this helps ensure conductivity. In some embodiments, the negative electrode active material has an adhesion of ≥ 1 N/m, to prevent separation between the negative electrode active material layer and the negative electrode current collector. In some embodiments, the negative electrode active material layer includes a negative electrode material, and the negative electrode material includes at least one of lithium titanate, silicon-based materials, tin-based materials, lithium metal materials, or carbon materials.

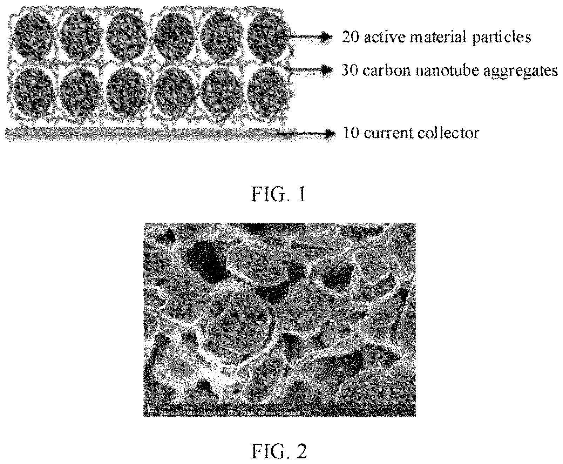

In some embodiments of this application, referring to FIG. 1 and FIG. 2, the electrode includes a current collector 10 and an active material layer. The active material layer includes active material particles 20 and carbon nanotube aggregates 30. The carbon nanotube aggregates 30 form a cage-like grid. The carbon nanotube aggregates 30 may be intertwined on the surfaces of the active material particles or have a gap with the active material particles, and the active material particles are wrapped in a cage-like structure. In some embodiments of this application, the electrode does not contain a binder, the carbon nanotube aggregates 30 are used to increase long-range electron conductivity while avoiding the hindrance to ion transmission by the binder and improving the kinetic performance. This is conducive to improving the rate performance and energy density.

There may be a plurality of methods for preparing an electrode in the embodiments of this application, and the following illustrates some methods.

Method 1: Carbon nanotubes and a light-sensitive dispersant are added into a dispersing medium to form a homogeneous dispersion liquid by a method such as ultrasonication, stirring, and sand grinding. An active material and the carbon nanotube dispersion liquid are mixed and dispersed in proportion to form a slurry. A current collector is coated with the slurry on at least one surface and dried, and then subjected to light treatment to form a binder-free electrode plate.

Method 2: An active material and a carbon nanotube dispersion liquid are mixed and dispersed to form a slurry. A current collector is coated with the slurry on at least one surface and dried to form a binder-free electrode plate.

The electrochemical apparatus in some embodiments of this application includes an electrode. The electrode can be an electrode in any one of the embodiments of this application. In some embodiments, the electrochemical apparatus includes a positive electrode, a negative electrode, and a separator disposed between the positive electrode and the negative electrode. In some embodiments, the positive electrode or negative electrode may be any one of the foregoing electrodes. In some embodiments, a positive electrode current collector may be Al foil, or certainly may be another current collector commonly used in the art.

In some embodiments, a separator includes at least one of polyethylene, polypropylene, polyvinylidene fluoride, polyethylene terephthalate, polyimide, or aramid. For example, polyethylene is selected from at least one of high-density polyethylene, low-density polyethylene, or ultra-high molecular weight polyethylene. Especially, polyethylene and polypropylene have a good effect on preventing short circuits, and can improve stability of a battery through a shutdown effect. In some embodiments, a thickness of the separator ranges from approximately 5-50 µm.

In some embodiments, a surface of the separator may further include a porous layer. The porous layer is disposed on at least one surface of the separator. The porous layer includes inorganic particles and the binder. The inorganic particles are selected from at least one of aluminum oxide (Al₂O₃), silicon oxide (SiO₂), magnesium oxide (MgO), titanium oxide (TiO₂), hafnium dioxide (HfO₂), tin oxide (SnO₂), cerium dioxide (CeO₂), nickel oxide (NiO), zinc oxide (ZnO), calcium oxide (CaO), zirconia oxide (ZrO₂), yttrium oxide (Y₂O₃), silicon carbide (SiC), boehmite, aluminum hydroxide, magnesium hydroxide, calcium hydroxide, or barium sulfate. In some embodiments, a pore diameter of the separator ranges from approximately 0.01-1 µm. The binder in the porous layer is selected from at least one of polyvinylidene fluoride, vinylidene fluoride-hexafluoropropylene copolymer, polyamide, polyacrylonitrile, polyacrylic ester, polyacrylic acid, a polyacrylic salt, sodium carboxymethyl cellulose, polyvinylpyrrolidone, polyvinyl ether, polymethyl methacrylate, polytetrafluoroethylene, or polyhexafluoropropylene. The porous layer on the surface of the separator can improve heat resistance, oxidation resistance, and electrolyte infiltration performance of the separator, and enhance adhesion between the separator and the electrode plate.

In some embodiments of this application, the electrochemical apparatus may be a wound type or stacked type. In some embodiments, the positive electrode and/or the negative electrode of the electrochemical apparatus may be a multi-layer structure formed through winding or stacking, or may be a single-layer structure formed by stacking a single positive electrode, a separator, and a single negative electrode.

In some embodiments, the electrochemical apparatus includes a lithium-ion battery but this application is not limited thereto. In some embodiments, the electrochemical apparatus may further include an electrolyte. The electrolyte may be one or more of a gel electrolyte, a solid electrolyte, and an electrolyte solution, where the electrolyte solution includes a lithium salt and a non-aqueous solvent. The lithium salt is selected from one or more of LiPF₆, LiBF₄, LiAsF₆, LiClO₄, LiB(C₆H₅)₄, LiCH₃SO₃, LiCF₃SO₃, LiN(SO₂CF₃)₂, LiC(SO₂CF₃)₃, LiSiF₆, LiBOB, or lithium difluoroborate. For example, LiPF₆ is selected as the lithium salt because it has high ionic conductivity and can improve cycling performance.

The non-aqueous solvent may be a carbonate compound, a carboxylate compound, an ether compound, another organic solvent, or a combination thereof. The carbonate compound may be a linear carbonate compound, a cyclic carbonate compound, a fluorocarbonate compound, or a combination thereof.

An example of the linear carbonate compound is diethyl carbonate (DEC), dimethyl carbonate (DMC), dipropyl carbonate (DPC), methyl propyl carbonate (MPC), ethyl propyl carbonate (EPC), methyl ethyl carbonate (MEC), and a combination thereof. An example of the cyclic carbonate compound is ethylene carbonate (EC), propylene carbonate (PC), butylene carbonate (BC), vinyl ethylene carbonate (VEC), or a combination thereof. An example of the fluorocarbonate compound is fluoroethylene carbonate (FEC), 1,2-difluoroethylene carbonate, 1,1-difluoroethylene carbonate, 1,1,2-trifluoroethylene carbonate, 1,1,2,2-tetrafluoroethylene carbonate, 1-fluoro-2-methylethylene carbonate, 1-fluoro-1-methylethylene carbonate, 1,2-difluoro-1-methyl ethylene carbonate, 1,1,2-trifluoro-2-methylethylene carbonate, trifluoromethylethylene carbonate, or a combination thereof.

An example of the carboxylate compound is methyl acetate, ethyl acetate, n-propyl acetate, tert-butyl acetate, methyl propionate, ethyl propionate, propyl propionate, γ-butyrolactone, decanolide, valerolactone, mevalonolactone, caprolactone, methyl formate, or a combination thereof.

An example of the ether compound is dibutyl ether, tetraglyme, diglyme, 1,2-dimethoxyethane, 1,2-diethoxyethane, ethoxymethoxy ethane, 2-methyltetrahydrofuran, tetrahydrofuran, or a combination thereof.

An example of the another organic solvent is dimethyl sulfoxide, 1,2-dioxolane, sulfolane, methyl sulfolane, 1,3-dimethyl-2-imidazolidinone, N-methyl-2-pyrrolidone, formamide, dimethylformamide, acetonitrile, trimethyl phosphate, triethyl phosphate, trioctyl phosphate, phosphate ester, or a combination thereof.

In some embodiments of this application, a lithium-ion battery is used as an example. A positive electrode, a separator, and a negative electrode are wound or stacked in sequence to form an electrode assembly, and the electrode assembly is then packaged, for example, in an aluminum-plastic film, followed by injection of an electrolyte, formation, and packaging, so that the lithium-ion battery is prepared. Then, a performance test is performed on the prepared lithium-ion battery.

Those skilled in the art will understand that the method for preparing the electrochemical apparatus (for example, lithium-ion battery) described above is only an embodiment. Without departing from the content disclosed in this application, other methods commonly used in the art may be used.

This application provides an electronic apparatus including an electrochemical apparatus. The electrochemical apparatus is the electrochemical apparatus according to any one of the foregoing embodiments. The electronic apparatus in the embodiments of this application is not particularly limited, and may be any known electronic apparatus used in the prior art. In some embodiments, the electronic apparatus may include but is not limited to a notebook computer, a pen-input computer, a mobile computer, an electronic book player, a portable telephone, a portable fax machine, a portable copier, a portable printer, a stereo headset, a video recorder, a liquid crystal television, a portable cleaner, a portable CD player, a mini-disc, a transceiver, an electronic notepad, a calculator, a memory card, a portable recorder, a radio, a standby power source, a motor, an automobile, a motorcycle, a power-assisted bicycle, a bicycle, a drone, a lighting appliance, a toy, a game console, a clock, an electric tool, a flash lamp, a camera, or a large household battery.

Some specific examples and comparative examples are listed below to better illustrate this application. Lithium-ion batteries are used for illustration.

### Example 1

Preparation of positive electrode plate: Positive electrode material lithium cobalt oxide and conductive agent carbon nanotubes (CNT) were mixed at a mass ratio of 99.5:0.5, with N-methyl pyrrolidone (NMP) as a solvent, to prepare a slurry. The foregoing materials were stirred well to form a positive electrode active material layer slurry. A positive electrode current collector aluminum foil was evenly coated with the slurry and dried at 90°C to obtain a positive electrode plate. Thickness of a positive electrode active material layer on one side of the positive electrode current collector was 63 µm.

Preparation of negative electrode plate: Negative electrode material graphite, styrene acrylate, and sodium carboxymethyl cellulose were mixed at a mass ratio of 97.6:1.2:1.2, with deionized water as a solvent, to form a negative electrode active material layer slurry. Copper foil was used as a negative electrode current collector, and a negative electrode current collector was coated with the negative electrode active material layer slurry and dried at 90°C to obtain a negative electrode plate, with a 75 µm thickness of the negative electrode active material layer on one side of the negative electrode current collector and a compacted density of 1.75 g/cm³.

Preparation of separator: A separator is 8 µm thick polyethylene (PE).

Preparation of electrolyte: In an environment with a water content less than 10 ppm, lithium hexafluorophosphate and a non-aqueous organic solvent (a weight ratio of ethylene carbonate (EC):diethyl carbonate (DEC):propylene carbonate (PC):propyl propionate (PP):vinylene carbonate (VC) was equal to 20:30:20:28:2) were mixed at a weight ratio of 8:92 to prepare an electrolyte.

Preparation of lithium-ion battery: The positive electrode plate, the separator, and the negative electrode plate were stacked in sequence, so that the separator was disposed between the positive electrode plate and the negative electrode plate for separation, and winding was performed to obtain an electrode assembly. The electrode assembly was put in an outer package aluminum-plastic film, and was dehydrated at 80°C. Then, the foregoing electrolyte was injected and packaging was performed, followed by processes such as formation, degassing, and trimming to obtain a lithium-ion battery.

Examples 2 to 11 had parameters changed on a basis of the preparation steps in Example 1. The following tables show the specific parameters changed.

### Example 12

Preparation of positive electrode plate: Positive electrode material lithium cobalt oxide, polyvinylidene fluoride (PVDF), and conductive carbon black (Super P) were mixed at a mass ratio of 97.5:1.5:1.0, with N-methyl pyrrolidone (NMP) as a solvent, to prepare a slurry. The foregoing materials were stirred well to form a positive electrode active material layer slurry. A positive electrode current collector aluminum foil was evenly coated with the slurry and dried at 90°C to obtain a positive electrode plate, with a 63 µm thickness of a positive electrode active material layer on one side of the positive electrode current collector and a compacted density of 4.15 g/cm³.

Preparation of negative electrode plate: Negative electrode material graphite and carbon nanotubes (CNT) were mixed at a mass ratio of 99.5:0.5, with deionized water as a solvent, to form a negative electrode active material layer slurry. Copper foil was used as a negative electrode current collector, and a negative electrode current collector was coated with the negative electrode active material layer slurry and dried at 90°C to obtain a negative electrode plate, with a 75 µm thickness of the negative electrode active material layer on one side of the negative electrode current collector and a compacted density of 1.75 g/cm³.

The remaining preparation steps of Example 12 were the same as those of Example 1.

Examples 13 to 22 had parameters changed on a basis of the preparation steps in Example 12. The following tables show the specific parameters changed.

Examples 23 to 29 had parameters changed on a basis of the preparation steps in Example 1. The following tables show the specific parameters changed.

Examples 30 to 37 had parameters changed on a basis of the preparation steps in Example 12. The following tables show the specific parameters changed.

### Example 38

Preparation of positive electrode plate: Positive electrode material lithium cobalt oxide and conductive agent carbon nanotubes (CNT) were mixed at a mass ratio of 98.5:1.5, with N-methyl pyrrolidone (NMP) as a solvent, to prepare a slurry. The foregoing materials were stirred well to form a positive electrode active material layer slurry. A positive electrode current collector aluminum foil was evenly coated with the slurry and dried at 90°C to obtain a positive electrode plate. Thickness of a positive electrode active material layer on one side of the positive electrode current collector was 63 µm.

Preparation of negative electrode plate: Negative electrode material graphite and carbon nanotubes (CNT) were mixed at a mass ratio of 98.5:1.5, with deionized water as a solvent, to form a negative electrode active material layer slurry. Copper foil was used as a negative electrode current collector, and a negative electrode current collector was coated with the negative electrode active material layer slurry and dried at 90°C to obtain a negative electrode plate, with a 75 µm thickness of the negative electrode active material layer on one side of the negative electrode current collector and a compacted density of 1.75 g/cm³.

The remaining preparation steps of Example 38 were the same as those of Example 1.

### Comparative example 1

Preparation of positive electrode plate: Positive electrode material lithium cobalt oxide, binder polyvinylidene fluoride (PVDF), and conductive carbon black (Super P) were mixed at a mass ratio of 97.5:1.5:1.0, with N-methyl pyrrolidone (NMP) as a solvent, to prepare a slurry. The foregoing materials were stirred well to form a positive electrode active material layer slurry. A positive electrode current collector aluminum foil was evenly coated with the slurry and dried at 90°C to obtain a positive electrode plate.

The remaining preparation steps of Comparative example 1 were the same as those of Example 1. The specific parameter differences are shown in a table below.

### Comparative example 2

Preparation of positive electrode plate: Positive electrode material lithium cobalt oxide, binder polyvinylidene fluoride, and conductive carbon black (Super P) were mixed at a mass ratio of 95.0:3.0:2.0, with N-methyl pyrrolidone (NMP) as a solvent, to prepare a slurry. The foregoing materials were stirred well to form a positive electrode active material layer slurry. A positive electrode current collector aluminum foil was evenly coated with the slurry and dried at 90°C to obtain a positive electrode plate.

The remaining preparation steps of Comparative example 2 were the same as those of Example. The difference between the parameters of Comparative example 2 and Example 1 is shown in a table below.

### Comparative example 3

Preparation of positive electrode plate: Positive electrode material lithium cobalt oxide, binder polyvinylidene fluoride (PVDF), carbon nanotubes, and conductive carbon black (Super P) were mixed at a mass ratio of 97.5:1.4:0.5:0.6, with N-methyl pyrrolidone (NMP) as a solvent, to prepare a slurry. The foregoing materials were stirred well to form a positive electrode active material layer slurry. A positive electrode current collector aluminum foil was evenly coated with the slurry and dried at 90°C to obtain a positive electrode plate.

The remaining preparation steps of Comparative example 3 were the same as those of Example 1. The specific parameter differences are shown in a table below.

### Comparative example 4

Preparation of positive electrode plate: Positive electrode material lithium cobalt oxide, binder polyvinylidene fluoride (PVDF), and conductive carbon black (Super P) were mixed at a mass ratio of 97.5:1.5:1.0, with N-methyl pyrrolidone (NMP) as a solvent, to prepare a slurry. The foregoing materials were stirred well to form a positive electrode active material layer slurry. A positive electrode current collector aluminum foil was evenly coated with the slurry and dried at 90°C to obtain a positive electrode plate.

Preparation of negative electrode plate: Negative electrode material graphite, styrene acrylate, and sodium carboxymethyl cellulose were mixed at a mass ratio of 96.5:2.0:1.5, with deionized water as a solvent, to form a negative electrode active material layer slurry. Copper foil was used as a negative electrode current collector, and a negative electrode current collector was coated with the negative electrode active material layer slurry and dried at 90°C to obtain a negative electrode plate, with a 75 µm thickness of the negative electrode active material layer on one side of the negative electrode current collector and a compacted density of 1.75 g/cm³.

The remaining preparation steps of Comparative example 4 were the same as those of Example 1.

Comparative examples 5 and 6 were the same as in Comparative example 4 except for the composition of the negative electrode active material layer. The specific differences are shown in a table below.

The following describes the test methods in this application.

### 1. Resistivity test

A resistance tester was used to test the resistivity of the positive electrode active material layer and the negative electrode active material layer. The electrode plate was directly measured by controllable pressure probes on the upper and lower planes. An alternating current was loaded on the positive electrode plate or negative electrode plate under test, and a certain pressure (0.35 T) was applied to the active material layer under test. The overall resistance in the thickness direction of the electrode plate was obtained, and the area (A) and thickness (l) of the electrode plate under test were collected. According to the resistivity calculation formula (ρ=R*A/l), the resistivity of the electrode plate under test was derived.

### 2. Direct current resistance DCR test at 25°C

At 25°C, the lithium-ion battery was charged at a constant current of 0.5C to 3.95 V, then charged at a constant voltage to 0.05C, left standing for 30 min, discharged at 0.1C for 10 s (taking a point once every 0.1 s and recording a corresponding voltage value Ui), and discharged at 1C for 360 s (taking a point once every 0.1 s and recording a corresponding voltage value U₂); and the charging and discharging steps were repeated for 5 times, where "1C" refers to a current at which a battery is fully discharged in one hour. The DCR of the battery was calculated according to the following formula: DCR = (U₂ - U₁)/(1C - 0.1C).

### 3. 3C rate performance test

In an environment of 25°C, the battery was discharged at a constant current to 3 V to perform the first charge and discharge. The battery was charged at a constant current of 0.7C until the upper limit voltage was 4.48 V, then charged at a constant voltage to 0.05C, and then was discharged at a constant current of 0.2C until the final voltage was 3 V. The discharge capacity at 0.2C at that point was recorded, and then the battery was charged at a charging current of 0.7C until the upper limit voltage was 4.48 V, then charged at a constant voltage to 0.05C, discharged at a constant rate of 3C until the final voltage was 3 V. The discharge capacity at 3C at that point was recorded. Discharge capacity retention rate at 3C = (discharge capacity at 3C/discharge capacity at 0.2C) × 100%.

### 4. Cycling performance test

The battery was charged at a rate of 1C to 4.2 V, charged at a constant voltage of 4.21 V until the current dropped to 0.025C, left standing for 5 minutes, and then discharged at a rate of 1C to 3.0 V. This was one cycle. The discharge capacity was recorded as the capacity of the lithium-ion battery. The foregoing cycle was repeated 600 times, and the discharge capacity was recorded as the remaining capacity of the lithium-ion battery. Capacity retention rate after 600 cycles = remaining capacity/initial capacity × 100%.

### 5. Adhesion test

1. The positive/negative electrode plate was disassembled from a fully discharged battery in a low humidity environment and cut into electrode plates with a general length of 200 mm times a width of 20-30 mm using a customized knife die after the surface of the electrode plate had dried out; 2. a flat thin steel plate of about 200-300 mm in length and 40-60 mm in width was taken; a double-sided adhesive tape (with a length of about 100-150 mm and the same width as the electrode plates) was put in the center of the steel plate and smoothed with force to ensure that the double-sided adhesive tape was closely attached to the center of the steel plate; and the protective layer of the double-sided adhesive tape was removed and the active material layer surface of an electrode plate was attached to the tape (it must be ensured that the electrode plate and the adhesive tape were matched and adhered, otherwise a change in width during the peeling force test could make the test value inaccurate, and the peeling curve will show jumps or waves); and 3. the steel plate fixedly pasted with the electrode plate was inserted into a lower fixture of a tensile machine and fixed vertically; a section of the electrode plate with no tape was inserted into an upper fixture and fixed such that the section of the electrode plate attached to the tape had an angle of 180° with respect to a section of the electrode plate fixed in the upper fixture; and after the test sample was fixed, a calibration reset was performed, the test width was set, the electrode plate peeling length was 50-150 mm, the peeling speed was 50-100 mm/min, then the test was started, and a peeling strength curve and a peeling strength average could be obtained.

**Table 1**

| | Mass composition of positive electrode active material layer | Number of carbon nanotube units (unit) | Percentage of carbon nanotube aggregates in positive electrode active material layer (%wt) | Carbon nanotube diameter (nm) | Carbon nanotube length (µm) | Carbon nanotube aggregate diameter (nm) | Carbon nanotube aggregate length (µm) | Thickness of carbon nanotube aggregates on surface of positive electrode material (nm) | Number of active material particles in cage-like network (pcs) | Compacted density of positive electrode active material layer (g/cm³) |
|---|---|---|---|---|---|---|---|---|---|---|
| Example 1 | Lithium cobalt oxide:CNT = 99.5:0.5 | 50 | 0.5 | 1 | 10.0 | 50.0 | 10.0 | 50.0 | 3 to 5 | 4.15 |
| Example 2 | Lithium cobalt oxide:CNT = 99.0:1.0 | 50 | 1 | 1 | 10.0 | 50.0 | 10.0 | 50.0 | 3 to 5 | 4.15 |
| Example 3 | Lithium cobalt oxide:CNT = 98.5:1.5 | 50 | 1.5 | 1 | 10.0 | 50.0 | 10.0 | 50.0 | 3 to 5 | 4.15 |
| Example 4 | Lithium cobalt oxide:CNT = 97.0:3.0 | 50 | 3 | 1 | 10.0 | 50.0 | 10.0 | 50.0 | 3 to 5 | 4.15 |
| Example 5 | Lithium cobalt oxide:CNT = 95.0:5.0 | 50 | 5 | 1 | 10.0 | 50.0 | 10.0 | 50.0 | 3 to 5 | 4.15 |
| Comparative example 1 | Lithium cobalt oxide:PVDF:SP = 97.5:1.5:1.0 | N/A | N/A | N/A | N/A | N/A | N/A | N/A | N/A | 4.15 |
| Comparative example 2 | Lithium cobalt oxide:PVDF:SP = 95.0:3.0:2.0 | N/A | N/A | N/A | N/A | N/A | N/A | N/A | N/A | 4.15 |
| Comparative example 3 | Lithium cobalt oxide:PVDF:CNT: SP = 97.5:1.4:0.5:0.6 | N/A | 0.5 | 20 | 0.5 | N/A | N/A | N/A | N/A | 4.15 |

**Table 2**

| | Porosity of positive electrode active material layer (%) | Resistivity of positive electrode active material layer (Ω*cm) | Adhesion of positive electrode at 180° (N/m) | Direct current resistance (mΩ) | Discharge capacity retention rate at 3C (%) | Capacity retention rate after 600 cycles (%) |
|---|---|---|---|---|---|---|
| Example 1 | 15.0 | 6.00 | 1.0 | 36.0 | 83.0 | 82.0 |
| Example 2 | 16.0 | 3.00 | 1.5 | 33.0 | 86.0 | 85.0 |
| Example 3 | 17.0 | 1.00 | 2.0 | 30.0 | 89.0 | 88.0 |
| Example 4 | 18.5 | 0.20 | 3.0 | 27.0 | 92.0 | 91.0 |
| Example 5 | 20.0 | 0.08 | 5.0 | 23.0 | 94.0 | 93.0 |
| Comparative example 1 | 14.0 | 150.00 | 2.0 | 50.0 | 60.0 | 62.0 |
| Comparative example 2 | 15.0 | 160.00 | 3.0 | 52.0 | 58.0 | 60.0 |
| Comparative example 3 | 14.5 | 140.00 | 1.0 | 45.0 | 65.0 | 66.0 |

Table 1 and Table 2 show the preparation parameters and properties in Examples 1 to 5 and Comparative examples 1 to 3, respectively. Other preparation parameters not shown were the same.

As shown in Table 1 and Table 2, in Examples 1 to 5, instead of using a binder for the positive electrode active material layer, carbon nanotube aggregates were added, and the carbon nanotube aggregates were interwoven to form a cage-like network. A binder was used in Comparative examples 1 to 3. The direct current resistances in Examples 1 to 5 were obviously lower than those in Comparative examples 1 to 3, and the discharge capacity retention rates at 3C and the capacity retention rates after 600 cycles in Examples 1 to 5 were obviously higher than those in Comparative examples 1 to 3. This is because in Examples 1 to 5, the positive electrode active material layer was stabilized by carbon nanotube aggregates instead of the binder, thus avoiding the adverse influence of the binder on conductivity and improving the transfer efficiency of ions and electrons, and the carbon nanotube aggregates improved the long-range conductivity, thereby improving the conductivity, kinetic performance, and cycling performance of lithium-ion batteries.

**Table 3**

| Examples | Mass composition of positive electrode active material layer | Number of carbon nanotube units (unit) | Percentage of carbon nanotube aggregates in positive electrode active material layer (%wt) | Carbon nanotube diameter (nm) | Carbon nanotube length (µm) | Carbon nanotube aggregate diameter (nm) | Carbon nanotube aggregate length (µm) | Thickness of carbon nanotube aggregates on surface of positive electrode material (nm) | Number of active material particles in cage-like network (pcs) | Compacted density of positive electrode active material layer (g/cm³) |
|---|---|---|---|---|---|---|---|---|---|---|
| 6 | Lithium cobalt oxide:CNT = 98.5:1.5 | 2 | 1.5 | 0.5 | 1.0 | 1.0 | 1.0 | 1.0 | 1 to 2 | 4.15 |
| 7 | Lithium cobalt oxide:CNT = 98.5:1.5 | 10 | 1.5 | 1 | 5.0 | 10.0 | 5.0 | 20.0 | 3 to 5 | 4.15 |
| 3 | Lithium cobalt oxide:CNT = 98.5:1.5 | 50 | 1.5 | 1 | 10.0 | 50.0 | 10.0 | 50.0 | 3 to 5 | 4.15 |
| 8 | Lithium cobalt oxide:CNT = 98.5:1.5 | 50 | 1.5 | 7 | 10.0 | 350.0 | 10.0 | 350.0 | 3 to 5 | 4.15 |
| 9 | Lithium cobalt oxide:CNT = 98.5:1.5 | 50 | 1.5 | 10 | 10.0 | 500.0 | 10.0 | 500.0 | 3 to 5 | 4.15 |
| 10 | Lithium cobalt oxide:CNT = 98.5:1.5 | 500 | 1.5 | 1 | 50.0 | 500.0 | 50.0 | 500.0 | 3 to 5 | 4.15 |
| 11 | Lithium cobalt oxide:CNT = 98.5:1.5 | 1000 | 1.5 | 1 | 100.0 | 1000.0 | 100.0 | 1000.0 | 40 to 50 | 4.15 |

**Table 4**

| Examples | Porosity of positive electrode active material layer (%) | Resistivity of positive electrode active material layer (Ω*cm) | Adhesion of positive electrode at 180° (N/m) | Direct current resistance (mΩ) | Discharge capacity retention rate at 3C (%) | Capacity retention rate after 600 cycles (%) |
|---|---|---|---|---|---|---|
| 6 | 17.0 | 5.00 | 2.0 | 35.0 | 85.0 | 85.0 |
| 7 | 17.0 | 2.00 | 2.0 | 32.0 | 87.0 | 86.0 |
| 3 | 17.0 | 1.00 | 2.0 | 30.0 | 89.0 | 88.0 |
| 8 | 17.0 | 10.00 | 2.0 | 38.0 | 82.0 | 81.0 |
| 9 | 17.0 | 50.00 | 2.0 | 42.0 | 79.0 | 77.0 |
| 10 | 17.0 | 0.50 | 2.0 | 28.0 | 91.0 | 90.0 |
| 11 | 17.0 | 0.10 | 2.0 | 25.0 | 93.0 | 92.0 |

Table 3 and Table 4 show the preparation parameters and properties in Examples 6 to 11, respectively. Other preparation parameters not shown were the same.

As shown in Examples 3 and 6 to 11, when the number of carbon nanotubes contained in the carbon nanotube aggregate was 2-1000, the lithium-ion batteries all had a small direct current resistance and good discharge capacity retention rate at 3C and capacity retention rate after 600 cycles, especially when the number of carbon nanotubes contained in the carbon nanotube aggregate was 500-1000, the lithium-ion batteries had the best performance. This may be because the increased strength of the carbon nanotube aggregates can better stabilize the structure of the positive electrode active material layer.

It can be further learned from Examples 3 and 6 to 11, in the foregoing examples, the carbon nanotubes had a diameter of 0.5-10 nm and a length of 1-100 µm, and the carbon nanotube aggregates had a diameter of 1-1000 nm and a length of 1-100 µm. This shows that the lithium-ion batteries had better performance when the carbon nanotubes and the carbon nanotube aggregates were in the above parameter ranges. Example 9 shows slightly worse performance in the foregoing examples, with a larger direct current resistance and lower rate performance and cycling performance compared to those in the other examples. This is because the diameter of carbon nanotubes in Example 9 was the largest so that the conductivity of carbon nanotubes in their radial directions was weakened, resulting in an increase in direct current resistance, and this affected the rate performance and cycling performance. Therefore, the diameter of carbon nanotubes in some examples of this application was not greater than 10 nm.

**Table 5**

| | Mass composition of negative electrode active material layer | Number of carbon nanotube units (unit) | Percentage of carbon nanotube aggregates in negative electrode active material layer (%wt) | Carbon nanotube diameter (nm) | Carbon nanotube length (µm) | Carbon nanotube aggregate diameter (nm) | Carbon nanotube aggregate length (µm) | Thickness of carbon nanotube aggregates on surface of negative electrode material (nm) | Number of active material particles in cage-like network (pcs) | Compacted density of negative electrode active material layer (g/cm³) |
|---|---|---|---|---|---|---|---|---|---|---|
| Example 12 | Graphite:CNT = 99.5:0.5 | 50 | 0.5 | 1 | 10.0 | 50.0 | 10.0 | 50.0 | 3 to 5 | 1.75 |
| Example 13 | Graphite:CNT = 99.0:1.0 | 50 | 1 | 1 | 10.0 | 50.0 | 10.0 | 50.0 | 3 to 5 | 1.75 |
| Example 14 | Graphite:CNT = 98.5:1.5 | 50 | 1.5 | 1 | 10.0 | 50.0 | 10.0 | 50.0 | 3 to 5 | 1.75 |
| Example 15 | Graphite:CNT = 97.0:3.0 | 50 | 3 | 1 | 10.0 | 50.0 | 10.0 | 50.0 | 3 to 5 | 1.75 |
| Example 16 | Graphite:CNT = 95.0:5.0 | 50 | 5 | 1 | 10.0 | 50.0 | 10.0 | 50.0 | 3 to 5 | 1.75 |
| Comparative example 4 | Graphite: styrene acrylate: sodium carboxymethyl cellulose = 96.5:2.0:1.5 | N/A | N/A | N/A | N/A | N/A | N/A | N/A | N/A | 1.75 |

| | Mass composition of negative electrode active material layer | Number of carbon nanotube units (unit) | Percentage of carbon nanotube aggregates in negative electrode active material layer (%wt) | Carbon nanotube diameter (nm) | Carbon nanotube length (µm) | Carbon nanotube aggregate diameter (nm) | Carbon nanotube aggregate length (µm) | Thickness of carbon nanotube aggregates on surface of negative electrode material (nm) | Number of active material particles in cage-like network (pcs) | Compacted density of negative electrode active material layer (g/cm³) |
|---|---|---|---|---|---|---|---|---|---|---|
| Comparative example 5 | Graphite: styrenebutadiene rubber: sodium carboxymethyl cellulose=97:2.0: 1.0 | N/A | N/A | N/A | N/A | N/A | N/A | N/A | N/A | 1.75 |
| Comparative example 6 | Graphite: styrene acrylate: sodium carboxymethyl cellulose = 98.0:1.0:1.0 | N/A | N/A | N/A | N/A | N/A | N/A | N/A | N/A | 1.75 |

**Table 6**

| | Porosity of negative electrode active material layer (%) | Resistivity of negative electrode active material layer (Ω*cm) | Adhesion of negative electrode at 180° (N/m) | Direct current resistance (mΩ) | Discharge capacity retention rate at 3C (%) | Capacity retention rate after 600 cycles (%) |
|---|---|---|---|---|---|---|
| Example 12 | 25.0 | 0.60 | 7.0 | 34.0 | 84.5 | 83.0 |
| Example 13 | 28.0 | 0.30 | 8.0 | 31.0 | 87.0 | 86.0 |
| Example 14 | 32.0 | 0.10 | 9.0 | 28.0 | 90.0 | 89.0 |
| Example 15 | 33.0 | 0.02 | 10.0 | 25.0 | 93.0 | 92.0 |
| Example 16 | 35.0 | 0.01 | 12.0 | 21.0 | 94.5 | 94.0 |
| Comparative example 4 | 24.0 | 1.20 | 9.0 | 48.0 | 61.0 | 63.0 |
| Comparative example 5 | 23.0 | 1.30 | 8.5 | 50.0 | 59.0 | 60.0 |
| Comparative example 6 | 22.0 | 1.30 | 8.0 | 43.0 | 67.0 | 70.0 |

Table 5 and Table 6 show the preparation parameters and properties in Examples 12 to 16 and Comparative examples 4 to 6, respectively. Other preparation parameters not shown were the same.

As shown in Table 5 and Table 6, negative electrode active material layers with different mass ratios of graphite and carbon nanotubes were prepared in Examples 12 to 16, instead of using a binder for the negative electrode active material layer, carbon nanotube aggregates were added, and the carbon nanotube aggregates were interwoven to form a cage-like network. A binder was used in Comparative examples 4 to 6. The direct current resistances in Examples 12 to 16 were obviously lower than those in Comparative examples 4 to 6, and the discharge capacity retention rates at 3C and the capacity retention rates after 600 cycles in Examples 12 to 16 were obviously higher than those in Comparative examples 4 to 6. This is because in Examples 12 to 16, the negative electrode active material layer was stabilized by carbon nanotube aggregates instead of the binder, thus avoiding the adverse influence of the binder on conductivity and improving the transfer efficiency of ions and electrons, and the carbon nanotube aggregates improved the long-range conductivity, thereby improving the conductivity, kinetic performance, and cycling performance of lithium-ion batteries.

With reference to Examples 1 to 5 and 12 to 16, it can be seen that the electrode plate proposed in this application, whether it is a positive electrode plate or a negative electrode plate, can improve the conductivity, kinetic performance, and cycling performance of electrochemical apparatuses.

**Table 7**

| Examples | Mass composition of negative electrode active material layer | Number of carbon nanotube units (unit) | Percentage of carbon nanotube aggregates in negative electrode active material layer (%wt) | Carbon nanotube diameter (nm) | Carbon nanotube length (µm) | Carbon nanotube aggregate diameter (nm) | Carbon nanotube aggregate length (µm) | Thickness of carbon nanotube aggregates on surface of negative electrode material (nm) | Number of active material particles in cage-like network (pcs) | Compacted density of negative electrode active material layer (g/cm³) |
|---|---|---|---|---|---|---|---|---|---|---|
| 17 | Graphite: CNT = 98.5:1.5 | 2 | 1.5 | 0.5 | 1.0 | 1.0 | 1.0 | 1.0 | 1 to 3 | 1.75 |
| 18 | Graphite: CNT = 98.5:1.5 | 10 | 1.5 | 1 | 5.0 | 10.0 | 5.0 | 20.0 | 3 to 5 | 1.75 |
| 14 | Graphite: CNT = 98.5:1.5 | 50 | 1.5 | 1 | 10.0 | 50.0 | 10.0 | 50.0 | 3 to 5 | 1.75 |
| 19 | Graphite: CNT = 98.5:1.5 | 50 | 1.5 | 7 | 10.0 | 350.0 | 10.0 | 350.0 | 3 to 5 | 1.75 |
| 20 | Graphite: CNT = 98.5:1.5 | 50 | 1.5 | 10 | 10.0 | 500.0 | 10.0 | 500.0 | 3 to 5 | 1.75 |
| 21 | Graphite: CNT = 98.5:1.5 | 500 | 1.5 | 1 | 50.0 | 500.0 | 50.0 | 500.0 | 3 to 5 | 1.75 |
| 22 | Graphite: CNT = 98.5:1.5 | 1000 | 1.5 | 1 | 100.0 | 1000.0 | 100.0 | 1000.0 | 40 to 50 | 1.75 |

**Table 8**

| Examples | Porosity of negative electrode active material layer (%) | Resistivity of negative electrode active material layer (Ω*cm) | Adhesion of negative electrode at 180° (N/m) | Direct current resistance (mΩ) | Discharge capacity retention rate at 3C (%) | Capacity retention rate after 600 cycles (%) |
|---|---|---|---|---|---|---|
| 17 | 32.0 | 0.50 | 9.0 | 33.0 | 86.0 | 86.0 |
| 18 | 32.0 | 0.20 | 9.0 | 30.0 | 88.0 | 87.0 |
| 14 | 32.0 | 0.10 | 9.0 | 28.0 | 90.0 | 89.0 |
| 19 | 32.0 | 1.00 | 9.0 | 36.0 | 83.0 | 82.0 |
| 20 | 32.0 | 5.00 | 9.0 | 40.0 | 80.0 | 78.0 |
| 21 | 32.0 | 0.05 | 9.0 | 26.0 | 92.0 | 91.0 |
| 22 | 32.0 | 0.01 | 9.0 | 23.0 | 93.5 | 93.0 |

Table 7 and Table 8 show the preparation parameters and properties in Examples 6 to 11, respectively. Other preparation parameters not shown were the same.

As shown in Examples 14 and 17 to 22, when the number of carbon nanotubes contained in the carbon nanotube aggregate was 2-1000, the lithium-ion batteries all had a small direct current resistance and good discharge capacity retention rate at 3C and capacity retention rate after 600 cycles, as shown in Examples 21 and 22. When the number of carbon nanotubes contained in the carbon nanotube aggregate was 500-1000, the lithium-ion batteries had the best performance, with the lowest direct current resistance and the highest discharge capacity retention rate at 3C and capacity retention rate after 600 cycles. This may be because the increased number of carbon nanotube units increased the strength of the carbon nanotube aggregates, better stabilizing the structure of the negative electrode active material layer.

It can be further learned from Examples 14 and 17 to 22, in the foregoing examples, the carbon nanotubes had a diameter of 0.5-10 nm and a length of 1-100 µm, and the carbon nanotube aggregates had a diameter of 1-1000 nm and a length of 1-100 µm. This shows that the lithium-ion batteries had better performance when the carbon nanotubes and the carbon nanotube aggregates were in the above parameter ranges. Example 20 shows slightly worse performance in the foregoing examples, with a larger direct current resistance and lower rate performance and cycling performance compared to those in the other examples. This is because the diameter of carbon nanotubes in Example 20 was the largest so that the conductivity of carbon nanotubes in their radial directions was weakened, resulting in an increase in direct current resistance, and this affected the rate performance and cycling performance. Therefore, the diameter of carbon nanotubes in some examples of this application was not greater than 10 nm.

**Table 9**

| Examples | Mass composition of positive electrode active material layer | Number of carbon nanotube units (unit) | Percentage of carbon nanotube aggregates in positive electrode active material layer (%wt) | Carbon nanotube diameter (nm) | Carbon nanotube length (µm) | Carbon nanotube aggregate diameter (nm) | Carbon nanotube aggregate length (µm) | Thickness of carbon nanotube aggregates on surface of positive electrode material (nm) | Number of active material particles in cage-like network (pcs) | Type of positive electrode material | Compacted density of positive electrode active material layer (g/cm³) |
|---|---|---|---|---|---|---|---|---|---|---|---|
| 23 | Lithium cobalt oxide :CNT = 98.5:1.5 | 50 | 1.5 | 1 | 10.0 | 50.0 | 10.0 | 50.0 | 3 to 5 | Lithium cobalt oxide | 4.00 |
| 3 | Lithium cobalt oxide :CNT = 98.5:1.5 | 50 | 1.5 | 1 | 10.0 | 50.0 | 10.0 | 50.0 | 3 to 5 | Lithium cobalt oxide | 4.15 |
| 24 | Lithium cobalt oxide :CNT = 98.5:1.5 | 50 | 1.5 | 1 | 10.0 | 50.0 | 10.0 | 50.0 | 3 to 5 | Lithium cobalt oxide | 4.20 |
| 25 | Lithium cobalt oxide :CNT = 98.5:1.5 | 50 | 1.5 | 1 | 10.0 | 50.0 | 10.0 | 50.0 | 3 to 5 | Lithium cobalt oxide | 4.25 |
| 26 | Lithium nickel cobalt manganate: CNT = 98.5:1.5 | 50 | 1.5 | 1 | 10.0 | 50.0 | 10.0 | 50.0 | 3 to 5 | Lithium nickel cobalt manganate | 3.50 |
| 27 | Lithium iron phosphate:CNT = 98.5:1.5 | 50 | 1.5 | 1 | 10.0 | 50.0 | 10.0 | 50.0 | 3 to 5 | Lithium iron phosphate | 2.30 |
| 28 | Lithium manganate: CNT = 98.5:1.5 | 50 | 1.5 | 1 | 10.0 | 50.0 | 10.0 | 50.0 | 3 to 5 | Lithium manganate | 3.10 |
| 29 | Lithium nickel cobalt aluminate:CNT = 98.5:1.5 | 50 | 1.5 | 1 | 10.0 | 50.0 | 10.0 | 50.0 | 3 to 5 | Lithium nickel cobalt aluminate | 3.50 |

**Table 10**

| Examples | Porosity of positive electrode active material layer (%) | Resistivity of positive electrode active material layer (Ω*cm) | Adhesion of positive electrode at 180° (N/m) | Direct current resistance (mΩ) | Discharge capacity retention rate at 3C (%) | Capacity retention rate after 600 cycles (%) |
|---|---|---|---|---|---|---|
| 23 | 20.0 | 1.20 | 1.5 | 31.0 | 90.0 | 89.0 |
| 3 | 17.0 | 1.00 | 2.0 | 30.0 | 89.0 | 88.0 |
| 24 | 16.0 | 0.95 | 2.3 | 29.0 | 90.0 | 90.0 |
| 25 | 15.0 | 0.90 | 2.5 | 28.5 | 90.5 | 91.0 |
| 26 | 18.0 | 1.20 | 2.0 | 41.0 | 80.0 | 81.0 |
| 27 | 19.0 | 5.00 | 2.0 | 45.0 | 72.0 | 75.0 |
| 28 | 15.0 | 1.50 | 2.0 | 40.0 | 81.0 | 81.0 |
| 29 | 18.0 | 2.00 | 2.0 | 42.0 | 79.0 | 78.0 |

Table 9 and Table 10 show the preparation parameters and properties in Examples 3 and 23 to 29, respectively. Other preparation parameters not shown were the same.

As shown in Examples 3, 24, and 25, with the increase in the compacted density of the positive electrode active material layer, the porosity of the positive electrode active material layer correspondingly decreased, and the lithium-ion batteries had gradually decreased direct current resistance and increased oscillation of the discharge capacity retention rate at 3C and capacity retention rate after 600 cycles. This may be because the increase in the compacted density reduced the gap in the positive electrode material, thereby helping the transmission of ions and electrons, and this can increase the volumetric energy density. However, a further increased compacted density may lead to the breakage of the positive electrode material particles and increased consumption of electrolyte and may affect the cycling performance.

As shown in Examples 3 and 25 to 29, when the positive electrode material was lithium nickel cobalt manganate, lithium iron phosphate, lithium manganate, or lithium nickel cobalt aluminate, lithium-ion batteries had good comprehensive performance, and the performance was the best when the positive electrode material was lithium cobalt oxide.

**Table 11**

| Examples | Mass composition of negative electrode active material layer | Number of carbon nanotube units (unit) | Percentage of carbon nanotube aggregates in negative electrode active material layer (%wt) | Carbon nanotube diameter (nm) | Carbon nanotube length (µm) | Carbon nanotube aggregate diameter (nm) | Carbon nanotube aggregate length (µm) | Thickness of carbon nanotube aggregates on surface of negative electrode material (nm) | Number of active material particles in cage-like network (pcs) | Type of negative electrode material | Compacted density of negative electrode active material layer (g/cm³) |
|---|---|---|---|---|---|---|---|---|---|---|---|
| 30 | Graphite: CNT = 98.5:1.5 | 50 | 1.5 | 1 | 10.0 | 50.0 | 10.0 | 50.0 | 3 to 5 | Graphite | 1.30 |
| 14 | Graphite: CNT = 98.5:1.5 | 50 | 1.5 | 1 | 10.0 | 50.0 | 10.0 | 50.0 | 3 to 5 | Graphite | 1.75 |
| 32 | Graphite: CNT = 98.5:1.5 | 50 | 1.5 | 1 | 10.0 | 50.0 | 10.0 | 50.0 | 3 to 5 | Graphite | 1.80 |
| 33 | Graphite: CNT = 98.5:1.5 | 50 | 1.5 | 1 | 10.0 | 50.0 | 10.0 | 50.0 | 3 to 5 | Graphite | 1.85 |
| 34 | Silicon oxide:CNT = 98.5:1.5 | 50 | 1.5 | 1 | 10.0 | 50.0 | 10.0 | 50.0 | 3 to 5 | Silicon oxide | 1.60 |
| 35 | Lithium titanate: CNT = 98.5:1.5 | 50 | 1.5 | 1 | 10.0 | 50.0 | 10.0 | 50.0 | 3 to 5 | Lithium titanate | 1.75 |
| 36 | Silicon:CNT = 98.5:1.5 | 50 | 1.5 | 1 | 10.0 | 50.0 | 10.0 | 50.0 | 3 to 5 | Silicon | 1.60 |
| 37 | Hard carbon:CNT = 98.5:1.5 | 50 | 1.5 | 1 | 10.0 | 50.0 | 10.0 | 50.0 | 3 to 5 | Hard carbon | 1.30 |

**Table 12**

| Examples | Porosity of negative electrode active material layer (%) | Resistivity of negative electrode active material layer (Ω*cm) | Adhesion of negative electrode at 180° (N/m) | Direct current resistance (mΩ) | Discharge capacity retention rate at 3C (%) | Capacity retention rate after 600 cycles (%) |
|---|---|---|---|---|---|---|
| 30 | 32.0 | 0.15 | 7.0 | 29.5 | 87.5 | 88.0 |
| 14 | 32.0 | 0.10 | 9.0 | 28.0 | 90.0 | 89.0 |
| 32 | 32.0 | 0.09 | 9.5 | 27.6 | 91.0 | 90.0 |
| 33 | 32.0 | 0.08 | 10.0 | 27.0 | 92.0 | 92.0 |
| 34 | 33.0 | 0.20 | 6.5 | 35.0 | 84.0 | 83.0 |
| 35 | 25.0 | 0.16 | 6.0 | 32.0 | 86.0 | 85.0 |
| 36 | 33.0 | 0.15 | 7.0 | 31.0 | 87.0 | 86.0 |
| 37 | 35.0 | 0.06 | 8.0 | 22.0 | 95.0 | 94.0 |

Table 11 and Table 12 show the preparation parameters and properties in Examples 14 and 30 to 37, respectively. Other preparation parameters not shown were the same.

As shown in Examples 14 and 30 to 33, with the increase in the compacted density of the negative electrode active material layer, the lithium-ion batteries had gradually decreased direct current resistance and increased oscillation of the discharge capacity retention rate at 3C and capacity retention rate after 600 cycles. This may be because the increase in the compacted density reduced the gap in the negative electrode material, helping the transmission of ions and electrons, and this can increase the volumetric energy density. However, a further increased compacted density may lead to the breakage of the negative electrode material particles and increased consumption of electrolyte and may affect the cycling performance.

As shown in Examples 14 and 34 to 37, when the negative electrode material was graphite, silicon oxide, lithium titanate, silicon, or hard carbon, lithium-ion batteries had good comprehensive performance, and the performance was the best when the negative electrode material was hard carbon.

**Table 13**

| Example | Positive electrode formula | Negative electrode formula | Number of carbon nanotube units (unit) | Percentage of carbon nanotube aggregates in separator layer (%wt) | Carbon nanotube diameter (nm) | Carbon nanotube length (µm) | Carbon nanotube aggregate diameter (nm) | Carbon nanotube aggregate length (µm) | Thickness of carbon nanotube aggregates on surface of active material (nm) | Number of active material particles in cage-like network (pcs) | Compacted density of positive electrode active material layer (g/cm³) | Compacted density of negative electrode active material layer (g/cm³) |
|---|---|---|---|---|---|---|---|---|---|---|---|---|
| 38 | Lithium cobalt oxide: CNT = 98.5:1.5 | Graphite: CNT = 98.5:1.5 | 50 | 1.5 | 1 | 10.0 | 50.0 | 10.0 | 50.0 | 3 to 5 | 4.15 | 1.75 |

**Table 14**

| Example | Porosity of positive electrode active material layer (%) | Resistivity of positive electrode active material layer (Ω*cm) | Adhesion of positive electrode at 180° (N/m) | Porosity of negative electrode active material layer (%) | Resistivity of negative electrode active material layer (Ω*cm) | Adhesion of negative electrode at 180° (N/m) | Direct current resistance (mΩ) | Discharge capacity retention rate at 3C (%) | Capacity retention rate after 600 cycles (%) |
|---|---|---|---|---|---|---|---|---|---|
| 38 | 17.0 | 1.00 | 2.0 | 32.0 | 0.05 | 9.0 | 20.0 | 95.0 | 94.0 |

Table 13 and Table 14 show the preparation parameters and properties in Example 38, respectively.

In Example 38, no binder was added to the positive electrode or the negative electrode. From the performance test results in Example 38, it can be seen that in Example 38, the resistivity of the positive electrode active material layer and the resistivity of the negative electrode active material layer were low, the direct current resistance was low, and the discharge capacity retention rate at 3C and capacity retention rate after 600 cycles were high, with the best comprehensive performance.

The foregoing descriptions are only preferred examples of this application and explanations of the applied technical principles. Persons skilled in the art should understand that the scope of disclosure involved in this application is not limited to the technical solutions formed by the specific combination of the foregoing technical features, and should also cover other technical solutions formed by any combination of the foregoing technical features or their equivalent features, for example, the technical solution formed by replacement between the foregoing features and technical features having similar functions disclosed in this application.

## Claims

1. An electrode, wherein the electrode comprises a current collector and an active material layer located on one side or two sides of the current collector, the active material layer comprising an active material and a conductive agent; and the conductive agent comprises carbon nanotubes, the active material layer comprises rope-shaped carbon nanotube aggregates formed by the carbon nanotubes, the carbon nanotube aggregates are interwoven to form a cage-like network, and the active material is wrapped inside the cage-like network.

2. The electrode according to claim 1, wherein at least one of the following is satisfied:
(a) based on a total mass of the active material layer, a mass percentage of the carbon nanotube aggregates is 0.5%-5%;
(b) the carbon nanotube aggregates have a rope-shaped structure formed by 2-1000 carbon nanotubes intertwined;
(c) the carbon nanotubes have a diameter of 0.5-10 nm and a length of 1-100 µm; or
(d) the carbon nanotube aggregates have a diameter of 1-1000 nm and a length of 1-100 µm.

3. The electrode according to claim 1, wherein at least one of the following is satisfied:
(a) thickness of the carbon nanotube aggregates on particle surfaces of the active material is 10-1000 nm; or
(b) each network pore in the cage-like network comprises 1 to 50 particles of the active material.

4. The electrode according to claim 1, wherein Dv50 of the active material is 1-30 µm.

5. The electrode according to claim 1, wherein the electrode is a positive electrode, the current collector is a positive electrode current collector, the active material layer is a positive electrode active material layer, and at least one of the following conditions is satisfied:
(a) compacted density ρ₁ of the positive electrode active material layer is ≥ 3.0 g/cm3;
(b) porosity n₁ of the positive electrode active material layer satisfies: 20% ≥ n₁ ≥ 15%;
(c) resistivity of the positive electrode active material layer is 0.1 Ω*cm to 100 Q*cm;
(d) the positive electrode active material layer has an adhesion of ≥ 1 N/m; or
(e) the active material is a positive electrode material, and the positive electrode material comprises at least one of lithium iron phosphate, lithium nickel cobalt manganate, lithium manganate, lithium cobalt oxide, lithium-rich materials, sulfur, or sulfur-based compounds.

6. The electrode according to claim 1, wherein the electrode is a positive electrode, the current collector is a positive electrode current collector, the active material layer is a positive electrode active material layer, and compacted density ρ₁ of the positive electrode active material layer satisfies: 4.25 g/cm³ ≥ ρ₁ ≥ 2.3 g/cm³.

7. The electrode according to claim 1, wherein the electrode is a negative electrode, the current collector is a negative electrode current collector, the active material layer is a negative electrode active material layer, and at least one of the following is satisfied:
(a) compacted density ρ₂ of the negative electrode active material layer is ≥ 1.3 g/cm³;
(b) porosity n₂ of the negative electrode active material layer satisfies: 35% ≥ n₂ ≥ 25%;
(c) resistivity of the negative electrode active material layer is 0.01 Ω*cm to 50 Q*cm;
(d) the negative electrode active material has an adhesion of ≥ 1 N/m; or
(e) the negative electrode active material layer comprises a negative electrode material, and the negative electrode material comprises at least one of lithium titanate, silicon-based materials, tin-based materials, lithium metal materials, or carbon materials.

8. The electrode according to claim 1, wherein the electrode is a negative electrode, the active material layer is a negative electrode active material layer, and compacted density ρ₂ of the negative electrode active material layer satisfies: 1.85 g/cm³ ≥ ρ₂ ≥ 1.35 g/cm³.

9. An electrochemical apparatus, comprising an electrode; wherein
the electrode is the electrode according to any one of claims 1 to 8.

10. An electronic device, comprising the electrochemical apparatus according to claim 9.
